# EUROPEAN PATENT SPECIFICATION

(11) **EP 2 463 085 B1**
(45) Date of publication and mention of the grant of the patent: **15.01.2014**
(21) Application number: 11191477.6
(22) Date of filing: 01.12.2011
(51) Int. Cl.: B29D 30/26, B29D 30/00

(54) **Tire extractor apparatus and method of manufacturing a tire**
Vorrichtung zum Herausziehen von Reifen und Verfahren zur Herstellung eines Reifens
Appareil d'extracteur de pneu et procédé de fabrication de pneu

(30) Priority: 10.12.2010 US 965044
(43) Date of publication of application: 13.06.2012
(73) Proprietor: The Goodyear Tire & Rubber Company, Akron, OH 44316-0001 (US)
(72) Inventor: Stoila George Michael, Tallmadge, OH 44278 (US); Wells Dale Eugene, Massillon, OH 44646 (US); Sells, Thomas Alan, Topeka, KS 66618 (US)
(74) Representative: Kutsch, Bernd

(56) References cited:
- EP-A1- 1 681 153
- WO-A1-2005/042244
- GB-A- 2 030 106
- SU-A1- 1 162 615
- US-A- 3 152 031
- US-A- 3 475 254
- US-A- 4 830 693
- US-A- 5 380 383

## Description

### Field of the invention

The invention relates to the field of manufacturing, and more particularly to tire manufacturing.

### Background of the invention

In tire manufacturing, after a green tire is made, it is removed from the tire building drum and sent to the tire curing press typically via an automated process such as a conveyor belt. For very large tires such as earth mover tires, the typical automated process will not suffice due to the size and weight of the tire. Very large tires having a diameter over 127 cm need to be moved from the tire building machine to the tire mold and then manipulated into the mold. Thus it is desired to have a tire extraction apparatus to remove the green tire from the tire building drum and being capable of storing the green tire for short period of time without damaging the tire.

GB-A-2030 106 and SU-A- 1162615 each describe a tire support device in accordance with the preamble of claim 1.

### Summary of the Invention

The invention relates to a device in accordance with claim 1 and to a method in accordance with claim 12.

Dependent claims refer to preferred embodiments of the invention.

### Definitions

"Aspect Ratio" means the ratio of a tire's section height to its section width.

"Axial" and "axially" means the lines or directions that are parallel to the axis of rotation of the tire.

"Radial" and "radially" mean directions radially toward or away from the axis of rotation of the tire.

### Brief Description of the Drawings

The invention will be described by way of example and with reference to the accompanying drawings in which:
FIG. 1 is a perspective view of a tire extractor device of the present invention shown with a tire;
FIG. 2 is a perspective view of a tire extractor device of the present invention shown without a tire;
FIG. 3 is front view of the tire extractor device shown together in a support frame device;
FIG. 4 is a is side view of the tire extractor device and the support frame device;
FIG. 5 is a cross-sectional view of the bladder assembly shown in the inflated position in conjunction with a portion of a tire;
FIG. 6 is a cross-sectional view of the bladder assembly shown in the uninflated position in conjunction with a tire;
FIG. 7 is a cross-sectional view of the bladder in the unassembled position; and
FIG. 8 is a front view of the tire extractor ring with a tire mounted therein and shown in the horizontal position.

### Detailed Description of the Invention

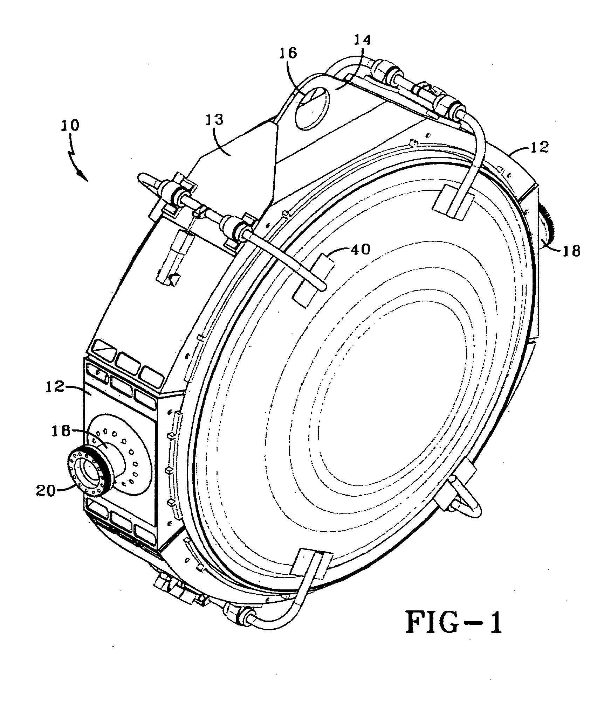

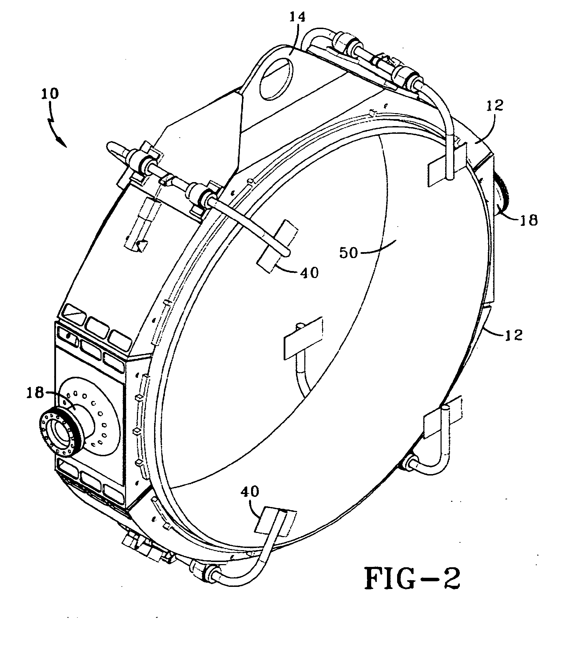

Figures 1 and 2 illustrate a tire extraction ring 10 suitable for removing a tire from a tire building drum (not shown). The tire extraction ring 10 is particularly suitable for large heavy tires, particularly tires having a size greater than 127 cm in diameter. The tire ring extractor 10 is formed of one or more arcuate segments 12 which are assembled together to form an annular ring. The segments 12 are preferably formed of steel meeting the standard of a pressure vessel grade weldment. One of the segments 12, segment 13 for instance, preferably has a flanged end 14 with a hole 16 for receiving a hook of a crane. Two of the segments preferably have diametrically opposed support rods or trunnions 18 which are welded to the segments. The support rods have an outer annular surface 20 which has an annular gear. The annular gear can be connected to drive means (not shown) for articulating the angle of the extraction ring from a vertical position to a horizontal position or any angle as desired. The tire extractor ring further preferably comprises a plurality of retention arms 40 which prevent the tire from falling out when the tire extractor ring is rotated horizontally as shown in Fig. 10. The retention arms 40 are pivotally mounted to the exterior of the extractor ring so that they can pivot 180 degrees and out of the way of the tire.

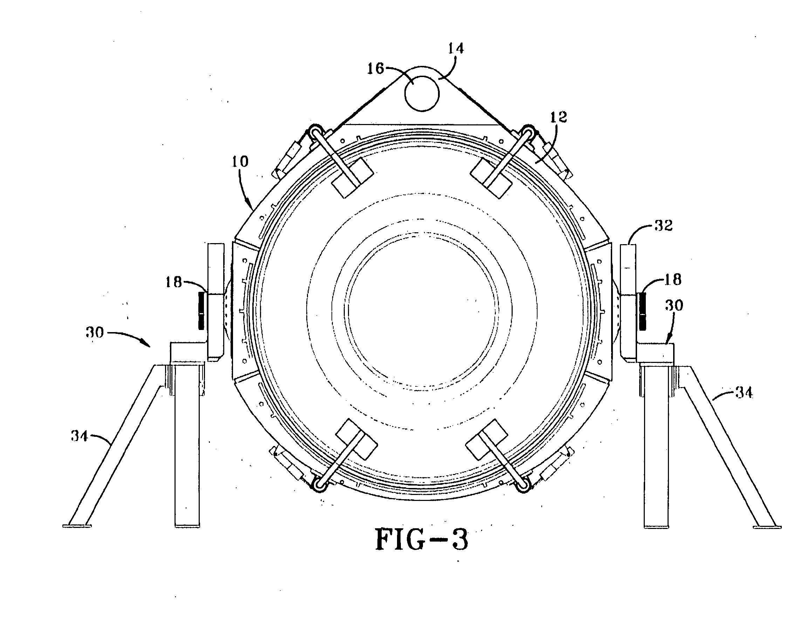

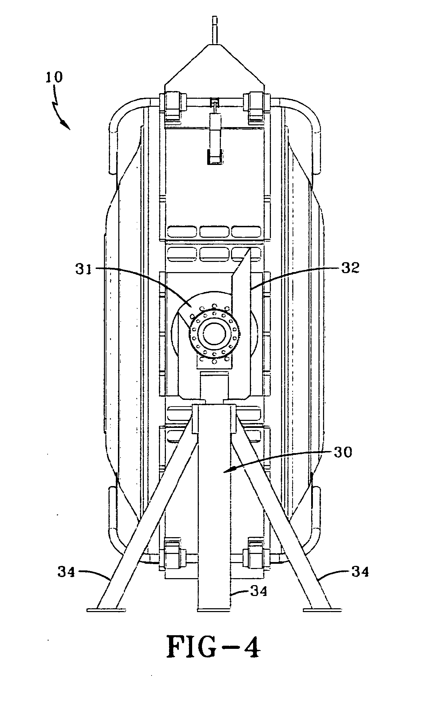

Figures 3 and 4 illustrate the tire ring extractor 10 mounted in a first and second tripod support stand 30. The tripod support stand 30 has an upper portion having a J shaped hook 32. The tripod support stands are positioned with respect to a tire extractor ring so that as the tire extractor ring is lowered via a crane, the opposed trunnions are lowered until they are received within the interior portion 31 of the J shaped hooks. The J shaped hooks allow for the rotation of the tire extractor ring. The J shaped hooks are supported by three support legs 34.

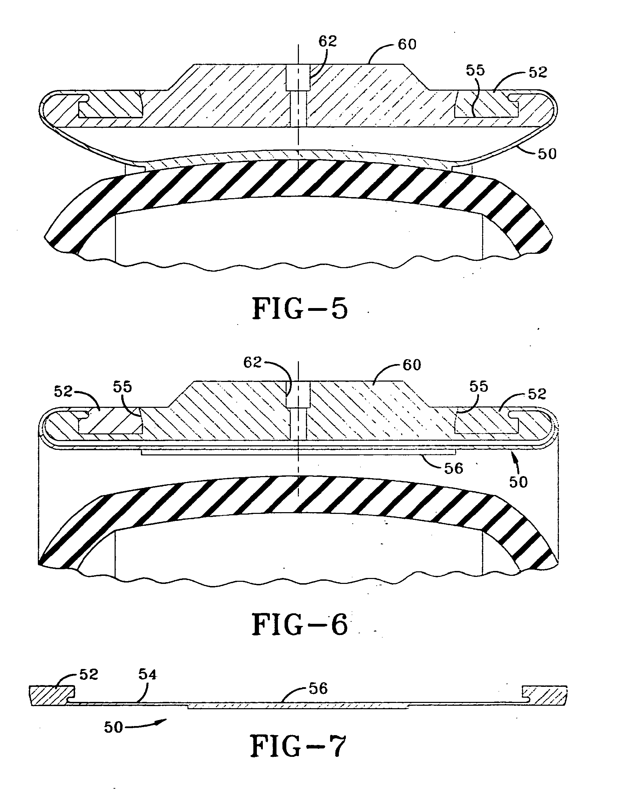

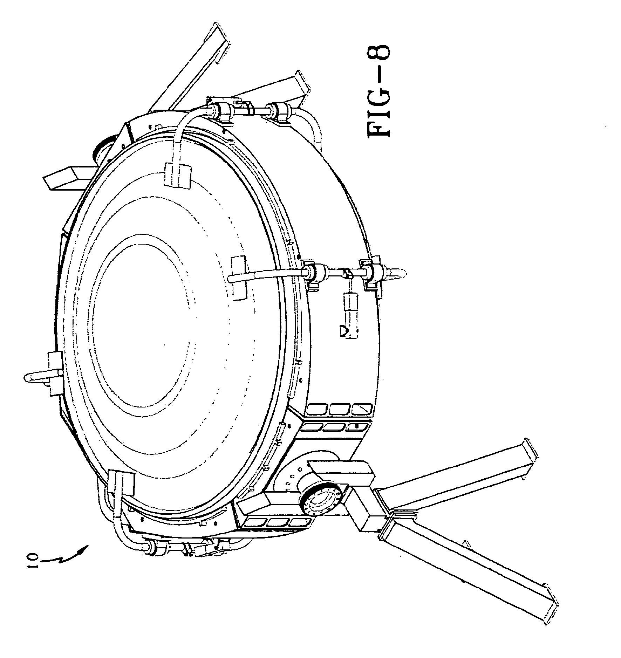

As shown in Figure 2, the tire ring extractor further comprises a bladder 50 located on the internal surface of the tire extractor ring 10. The bladder 50 functions as a clamp to retain the tire in place when in the inflated position. The bladder 50 is shown unassembled in Fig. 7. The bladder 50 is formed from an annular flexible sleeve preferably made of rubber or elastomer. The bladder material may preferably comprise textile reinforcements such as nylon or aramid. On the exterior surface 54 of the bladder there is a cord layer 56, preferably formed of high strength reinforcements such as steel. The steel cords are parallel and are oriented at a low angle with respect to the circumferential direction of the annular bladder in its assembled condition. More preferably, the angle of the reinforcements is in the range of 0 degrees to 90 degrees, and more preferably in the range of 30 to 60 degrees as measured relative to the circumferential direction. Preferably, there are two layers of steel cord. The one or more reinforcement layers preferably have a width 2/3 the width of the bladder. The outer ends of the bladder preferably comprise rubber feet 52 which are received within receptacles 55 in an annular support flange 60. Figure 5 illustrates the bladder in the inflated condition and in engagement with a portion of a tire, while Figures 6 and 8 illustrates the bladder in the uninflated condition. The annular support flange 60 has one or more circumferentially spaced interior passageways 62 for supplying air to the bladder.

During operation, a crane or other lifting device lifts the empty tire extractor ring into close proximity of a tire building drum. The extractor ring is lowered until the center of the extractor ring aligns with the center of the tire built on the tire building drum. The extractor ring is then slid over the outer circumference of the tire. The bladder 50 of the extractor ring is then inflated to fully engage the tire, and the tire building drum is actuated into a smaller diameter position. The tire extractor ring then removes the tire from the tire building drum.

## Claims

1. A tire support device comprising a support member having an inner surface and an outer surface, a support flange (60) mounted to the support member, the support flange (60) having an inflatable bladder (50) mounted thereto, wherein the inflatable bladder (50) is inflatable to an inflated position for supporting a tire and has an outer surface coming into contact with the tire when the bladder (50) is inflated, wherein the inflatable bladder (50) is uninflatable to an uninflated position for releasing the tire, and wherein the bladder has an axial width extending in parallel to the axial direction of the tire, **characterized in that** the outer surface of the inflatable bladder (50) coming into contact with the tire when the bladder (50) is inflated has a layer (56) of cord reinforcements, the layer (56) of cord reinforcements having an axial width extending in parallel to the axial direction of the tire, **in that** the layer (56) of cord reinforcements comes into contact with the tire over its axial full width when the bladder (50) is inflated, and **in that** the axial width the layer (56) of cord reinforcements is less than the axial width of the bladder (50).

2. The tire support device of claim 1 wherein the support member is annular.

3. The tire support device of claim 1 or 2 wherein the support flange (60) is annular.

4. The tire support device of clam 1, 2 or 3 wherein the inflatable bladder (50) is annular.

5. The tire support device of at least one of the previous claims wherein the support member has opposed trunnions (18) mounted on the outer surface.

6. The tire support device of at least one of the previous claims wherein the inflatable bladder (50) comprises textile reinforcements.

7. The tire support device of claim 6 wherein the textile reinforcements are angled in range of 0 to 90 degrees with respect to circumferential direction.

8. The tire support device of claim 1 wherein the cord reinforcements are steel reinforcements.

9. The tire support device of claim 1 further comprising a first and second support stand, wherein the tire support device is rotatably mounted within the support stands.

10. The tire support device of claim 2 or 3 wherein the annular support flange is mounted to the inner surface of the support member.

11. The tire support device of claim 1 wherein the support device is configured to receive tires having a diameter of 127 cm or more.

12. A method of manufacturing a tire, the method comprising:
building a tire on a tire building drum;
lifting an empty tire support device (10) in accordance with at least one of the previous claims into close proximity of the tire building drum;
aligning the tire support device (10) with the center of the tire on the tire building drum;
sliding the tire support device (10) over the outer circumference of the tire on the tire building drum;
inflating the bladder (50) of the tire support device (10) to fully engage the tire on the tire building drum;
actuating the tire building drum into a smaller diameter position;
extracting the tire from the tire building drum using the tire support device (10).

13. The method of claim 12 wherein the tire is a tire having a diameter of 127 cm or more.

## Patentansprüche

1. Reifenstützvorrichtung, umfassend ein Stützelement mit einer Innenfläche und einer Außenfläche, einen an dem Stützelement montierten Stützflansch (60), wobei der Stützflansch (60) einen daran montierten aufblasbaren Balg (50) aufweist, wobei der aufblasbare Balg (50) zu einer aufgeblasenen Position aufblasbar ist, um einen Reifen zu stützen, und eine Außenfläche aufweist, die mit dem Reifen in Kontakt kommt, wenn der Balg (50) aufgeblasen ist, wobei der aufblasbare Balg (50) zu einer unaufgeblasenen Position ablassbar ist, um den Reifen freizugeben, und wobei der Balg eine axiale Breite aufweist, die sich parallel zur axialen Richtung des Reifens erstreckt, **dadurch gekennzeichnet, dass** die Außenfläche des aufblasbaren Balgs (50), die mit dem Reifen in Kontakt kommt, wenn der Balg (50) aufgeblasen ist, eine Lage (56) von Kordverstärkungen aufweist, wobei die Lage (56) von Kordverstärkungen eine axiale Breite aufweist, die sich parallel zur axialen Richtung des Reifens erstreckt, dass die Lage (56) von Kordverstärkungen über ihre volle axiale Breite mit dem Reifen in Kontakt kommt, wenn der Balg (50) aufgeblasen ist, und dass die axiale Breite der Lage (56) von Kordverstärkungen kleiner als die axiale Breite des Balgs (50) ist.

2. Reifenstützvorrichtung nach Anspruch 1, wobei das Stützelement ringförmig ist.

3. Reifenstützvorrichtung nach Anspruch 1 oder 2, wobei der Stützflansch (60) ringförmig ist.

4. Reifenstützvorrichtung nach Anspruch 1, 2 oder 3, wobei der aufblasbare Balg (50) ringförmig ist.

5. Reifenstützvorrichtung nach mindestens einem der vorgenannten Ansprüche, wobei das Stützelement an der Außenfläche montierte, gegenüberliegende Zapfen (18) aufweist.

6. Reifenstützvorrichtung nach mindestens einem der vorgenannten Ansprüche, wobei der aufblasbare Balg (50) Textilverstärkungen umfasst.

7. Reifenstützvorrichtung nach Anspruch 6, wobei die Textilverstärkungen im Bereich von 0 bis 90 Grad in Bezug auf die Umfangsrichtung angewinkelt sind.

8. Reifenstützvorrichtung nach Anspruch 1, wobei die Kordverstärkungen Stahlverstärkungen sind.

9. Reifenstützvorrichtung nach Anspruch 1, weiter ein erstes und ein zweites Stützgestell umfassend, wobei die Reifenstützvorrichtung rotierbar in den Stützgestellen montiert ist.

10. Reifenstützvorrichtung nach Anspruch 2 oder 3, wobei der ringförmige Stützflansch an der Innenfläche des Stützelements montiert ist.

11. Reifenstützvorrichtung nach Anspruch 1, wobei die Stützvorrichtung zur Aufnahme von Reifen mit einem Durchmesser von 127 cm oder mehr ausgebildet ist.

12. Verfahren zur Herstellung eines Reifens, wobei das Verfahren umfasst:
Aufbauen eines Reifens auf einer Reifenbautrommel;
Anheben einer leeren Reifenstützvorrichtung (10) gemäß mindestens einem der vorgenannten Ansprüche in die unmittelbare Nähe der Reifenbautrommel;
Ausrichten der Reifenstützvorrichtung (10) zur Mitte des Reifens auf der Reifenbautrommel;
Schieben der Reifenstützvorrichtung (10) über den Außenumfang des Reifens auf der Reifenbautrommel;
Aufblasen des Balgs (50) der Reifenstützvorrichtung (10) zum vollständigen Eingriff des Reifens auf der Reifenbautrommel;
Betätigen der Reifenbautrommel zu einer Position mit kleinerem Durchmesser;
Herausziehen des Reifens aus der Reifenbautrommel unter Verwendung der Reifenstützvorrichtung (10).

13. Verfahren nach Anspruch 12, wobei der Reifen ein Reifen mit einem Durchmesser von 127 cm oder mehr ist.

## Revendications

1. Dispositif de support de bandage pneumatique comprenant un membre de support possédant une surface interne et une surface externe, une bride de support (60) montée sur le membre de support, une vessie gonflable (50) étant montée sur la bride de support (60), la vessie gonflable (50) pouvant être gonflée jusqu'à atteindre une position à l'état gonflé destinée à supporter un bandage pneumatique et possédant une surface externe qui entre en contact avec le bandage pneumatique lorsque la vessie (50) est gonflée, la vessie gonflable (50) pouvant être dégonflée jusqu'à atteindre une position dégonflée destinée à libérer le bandage pneumatique, et la vessie possédant une largeur axiale s'étendant parallèlement à la direction axiale du bandage pneumatique, **caractérisé en ce que** la surface externe de la vessie gonflable (50) qui entre en contact avec le bandage pneumatique lorsque la vessie (50) est gonflée possède une couche (56) de renforcement à base de câblés, la couche (56) de renforcement à base de câblés possédant une largeur axiale qui s'étend parallèlement à la direction axiale du bandage pneumatique, **en ce que** la couche (56) de renforcement à base de câblés entre en contact avec le bandage pneumatique sur toute sa largeur axiale lorsque la vessie (50) est gonflée, et **en ce que** la largeur axiale de la couche (56) de renforcement à base de câblés est inférieure à la largeur axiale de la vessie (50).

2. Dispositif de support de bandage pneumatique selon la revendication 1, dans lequel le membre de support est de configuration annulaire.

3. Dispositif de support de bandage pneumatique selon la revendication 1 ou 2, dans lequel la bride de support (60) est de configuration annulaire.

4. Dispositif de support de bandage pneumatique selon la revendication 1, 2 ou 3, dans lequel la vessie gonflable (50) est de configuration annulaire.

5. Dispositif de support de bandage pneumatique selon au moins une des revendications précédentes, dans lequel le membre de support possède des tourillons opposés (18) montés sur la surface externe.

6. Dispositif de support de bandage pneumatique selon au moins une des revendications précédentes, dans lequel la vessie gonflable (50) comprend des renforcements en textile.

7. Dispositif de support de bandage pneumatique selon la revendication 6, dans lequel les renforcements en textile forment un angle dans la plage de 0 à 90° par rapport à la direction circonférentielle.

8. Dispositif de support de bandage pneumatique selon la revendication 1, dans lequel les renforcements à base de câblés sont des renforcements en acier.

9. Dispositif de support de bandage pneumatique selon la revendication 1, comprenant en outre un premier et un deuxième socle de support, le dispositif de support du bandage pneumatique étant monté en rotation au sein des socles de support.

10. Dispositif de support de bandage pneumatique selon la revendication 2 ou 3, dans lequel la bride de support annulaire est montée sur la surface interne du membre de support.

11. Dispositif de support de bandage pneumatique selon la revendication 1, dans lequel le dispositif de support est configuré pour recevoir des bandages pneumatiques possédant un diamètre de 127 cm ou plus.

12. Procédé de confection d'un bandage pneumatique, le procédé comprenant le fait de :
confectionner un bandage pneumatique sur un tambour de confection de bandage pneumatique ;
soulever un dispositif vide de support de bandage pneumatique (10) selon au moins une des revendications précédentes pour l'amener à proximité étroite du tambour de confection de bandage pneumatique ;
mettre le dispositif de support de bandage pneumatique (10) en alignement avec le centre du bandage pneumatique sur le tambour de confection de bandage pneumatique ;
faire glisser le dispositif de support de bandage pneumatique (10) par-dessus la circonférence externe du bandage pneumatique sur le tambour de confection de bandage pneumatique ;
gonfler la vessie (50) du dispositif de support de bandage pneumatique (10) pour une mise en contact complète avec le bandage pneumatique sur le tambour de confection de bandage pneumatique ;
actionner le tambour de confection de bandage pneumatique dans une position correspondant à un diamètre inférieur ;
extraire le bandage pneumatique du tambour de confection de bandage pneumatique en utilisant le dispositif de support de bandage pneumatique (10).

13. Procédé selon la revendication 12, dans lequel le bandage pneumatique est un bandage pneumatique possédant un diamètre de 127 cm ou plus.
